# FASCICULE DE BREVET EUROPEEN

(11) **EP 2 057 098 B1**
(45) Date de publication et mention de la délivrance du brevet: **30.12.2009**
(21) Numéro de dépôt: 07804737.0
(22) Date de dépôt: 08.08.2007
(51) Int. Cl.: C02F 1/461

(54) **APPAREIL COMPORTANT AU MOINS UNE CELLULE D'ÉLECTROLYSE**
VORRICHTUNG MIT MINDESTENS EINER ELEKTROLYSEZELLE
APPARATUS INCLUDING AT LEAST ONE ELECTROLYTIC CELL

(30) Priorité: 01.09.2006 CH 14082006
(43) Date de publication de la demande: 13.05.2009
(73) Titulaire: Bulane SA, 1203 Genève (CH)
(72) Inventeur: BERGLUND, Claes, 1206 Genève (CH); LEITGIB, Pierre, 1222 Vesenaz (CH)
(74) Mandataire: Micheli, Bertrand François
(86) Numéro de dépôt international: PCT/IB2007/002284
(87) Numéro de publication internationale: WO 2008/026027

(56) Documents cités:
- WO-A-2005/044739
- JP-A- 6 063 553
- US-A- 5 728 287
- US-A1- 2004 154 918

## Description

La présente invention a pour objet un appareil comportant au moins une cellule d'électrolyse, notamment pour la production à partir d'eau salée ou saumâtre d'une solution de potabilisation et de désinfection, pouvant être mise en oeuvre sur le terrain en particulier dans des pays en voie de développement.

On connaît de tels appareils du document WO/2005/044739 qui décrit une cellule d'électrolyse unitaire comportant une enceinte formée de deux pièces moulées identiques, emboîtées l'une sur l'autre renfermant des électrodes disposées parallèlement les unes aux autres dans cette enceinte, les deux électrodes latérales, extérieures, étant reliées par soudure à des conducteurs électriques.

Les principaux inconvénients d'un tel appareil sont, d'une part, qu'il ne comporte qu'une cellule d'électrolyse, ce qui limite la production de la solution de potabilisation et de désinfection et, d'autre part, que les soudures entre les conducteurs électriques et les électrodes sont sujettes à une rapide corrosion limitant la durée de vie de l'appareil et nécessitant de fréquente réparations.

La présente invention a pour but la réalisation d'un appareil comprenant au moins une cellule d'électrolyse, notamment pour la production sur le terrain d'une solution de potabilisation de l'eau et de désinfection qui obvie aux inconvénients des appareils tels que décrits dans le document précité permettant ainsi d'augmenter la durée d'utilisation de l'appareil sans réparation et de réaliser des ensembles ayant une grande capacité de production de ladite solution.

La présente invention a pour objet un appareil comportant au moins une cellule d'électrolyse comprenant les caractéristiques énumérées à la revendication 1.

Le dessin annexé illustre schématiquement et à titre d'exemple une forme d'exécution d'un appareil d'électrolyse selon la présente invention.
La figure 1 est une vue en perspective d'une cellule d'électrolyse de l'appareil selon l'invention.
La figure 2 est une vue en perspective du corps du boîtier d'une cellule d'électrolyse telle qu'illustrée à la figure 1.

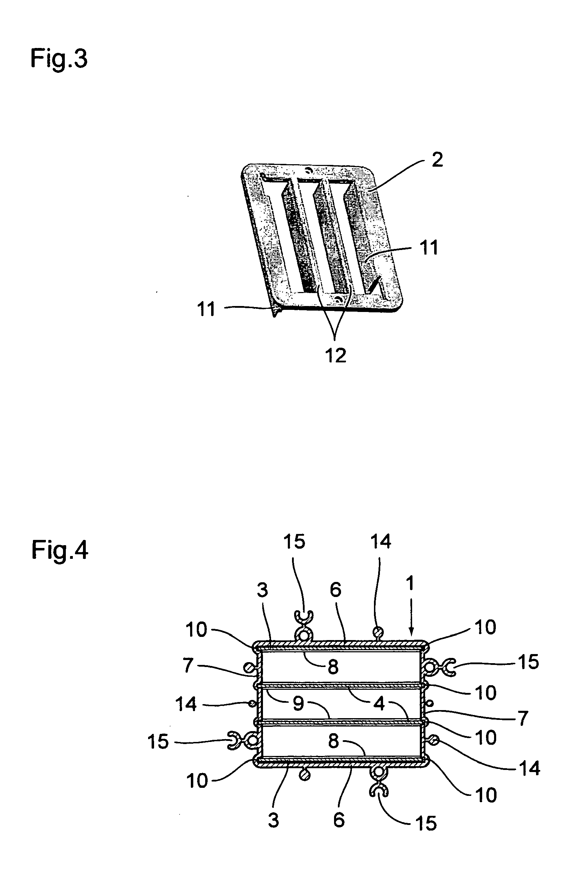

La figure 3 est une vue en perspective du couvercle du boîtier d'une cellule d'électrolyse telle qu'illustrée à la figure 1.
La figure 4 est une coupe transversale du corps du boîtier de la cellule d'électrolyse.
La figure 5 est une vue en perspective de dessus d'un appareil d'électrolyse selon l'invention comportant trois cellules d'électrolyses telles qu'illustrées à la figure 1.
La figure 6 est une vue de dessous de l'appareil d'électrolyse illustré à la figure 5.
La figure 7 illustre le procédé de découpe des électrodes d'une cellule d'électrolyse à partir d'un flanc de matériau adéquat.

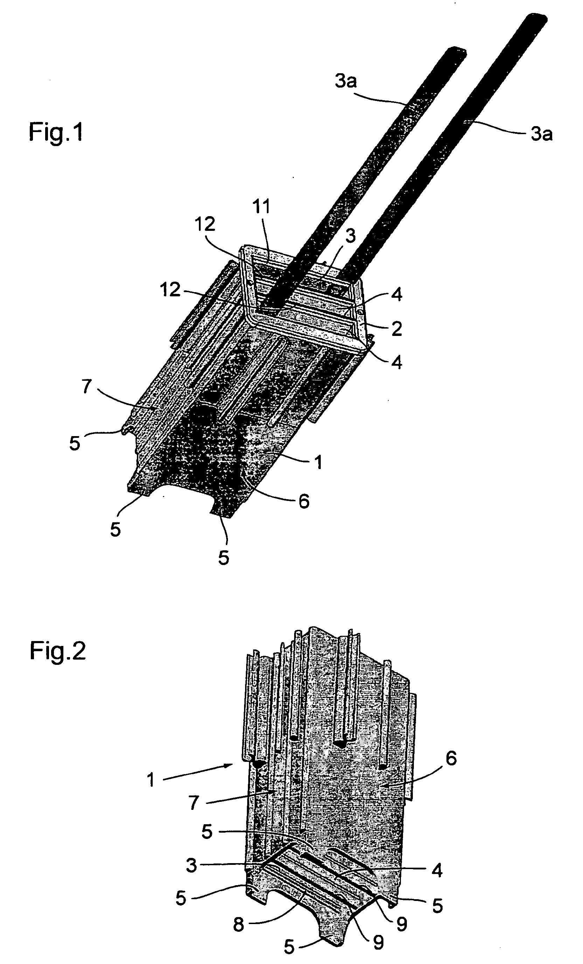

L'appareil d'électrolyse selon la présente invention pour la production sur le terrain, c'est-à-dire dans des conditions difficiles dans le cadre d'opérations humanitaires par exemple, d'une solution de potabilisation de l'eau et de désinfection à partir d'eau salée ou saumâtre comporte au moins une, mais généralement plusieurs, cellules d'électrolyse pouvant s'accoupler les unes aux autres pour former un appareil monolithique. Grâce à cette conception modulable de l'appareil, sa production de solution de potabilisation et de désinfection peut être adaptée aux besoins. Chaque cellule d'électrolyse de l'appareil d'électrolyse est constituée comme celle illustrée à la figure 1 et qui va être décrite dans ce qui suit.

Chaque cellule d'électrolyse se compose d'une coque ou boîtier présentant un corps 1 et un couvercle 2, ainsi que d'électrodes d'alimentation 3 et d'électrodes intermédiaires 4.

Le corps 1 de la coque de la cellule d'électrolyse se présente sous la forme d'un parallélépipède tubulaire ouvert à ses deux extrémités. La partie inférieure de ce corps 1 comporte des pieds 5 tandis que son extrémité supérieure est plane. Dans la forme d'exécution illustrée, ce corps parallélépipédique comporte deux paires 6, 7 de parois latérales se faisant face deux à deux, la largeur des parois d'une des paires 6 étant plus grande que celle de l'autre paire 7.

La face supérieure du corps 1 de la coque ou boîtier est plane et reçoit le couvercle 2 qui, lui, est fixé en position de service par collage, boutrolage ou tous autres moyens. Cette coque formée d'un corps 1 et du couvercle 2 est en matière isolante de l'électricité, par exemple en matière plastique.

A proximité de son extrémité inférieure comportant les pieds 5, le corps 1 de la coque comporte des butées 8 saillant des faces intérieures des parois 7 de ce corps et des traverses 9 reliant les parois 6 du corps 1 parallèlement aux parois 7 de ce corps. Les faces intérieures des parois 7 du corps 1 de la coque comportent des rainures longitudinales 10 dans lesquelles les électrodes 3, 4 sont insérées par le haut du corps 1 jusqu'à buter contre les butées 8 et les traverses 9. Le couvercle 2 comporte des lamelles de retenue 11, 12 entrant en contact avec les tranches supérieures des électrodes 3, 4 en position de service pour maintenir celles-ci en place dans la coque.

Les électrodes d'alimentation 3 comportent des tiges 3a venues d'une seule pièce de fabrication avec la plaque 3 de ces électrodes d'alimentation, de manière à éviter toute soudure ou connexion qui seraient noyée dans l'électrolyte en fonctionnement de la cellule d'électrolyse.

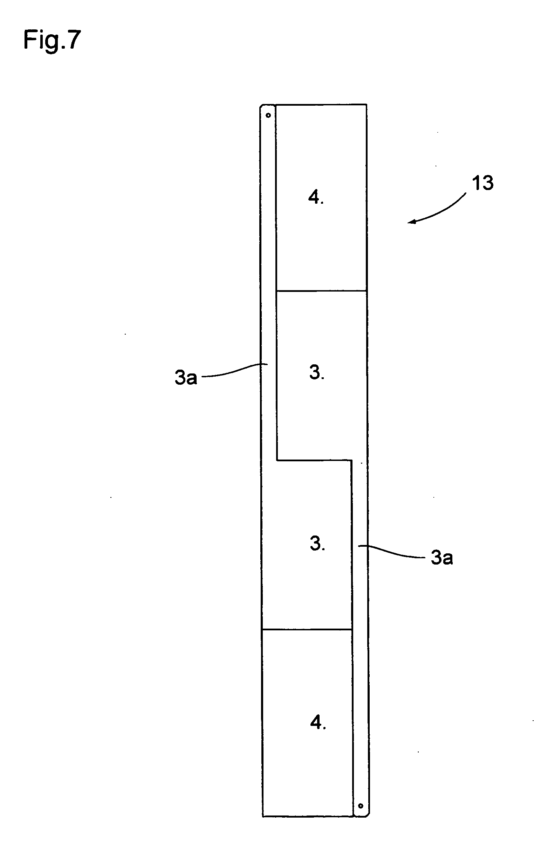

Ces électrodes 3, 4, généralement en titane, proviennent de divers fabricants (De Nora, Permascand) et sont découpées dans un flanc de matériau 13 (figure 7) de manière à éviter toute chute de matière première celle-ci étant relativement onéreuse. La forme en L des électrodes d'alimentation 3, 3a permet d'éviter toute soudure ou connexion entre les plaques 3 et la tige 3a et l'extrémité libre des tiges 3a est conformée de manière à pouvoir être connectée directement à des connecteurs standards par exemple de type "Faston" de 9,5 mm.

Dans l'exemple illustré, l'appareil d'électrolyse est composé de quatre électrodes en titane 3, 4 insérées dans une coque formée d'un corps 1 et d'un couvercle 2 en matière plastique injectée. Les électrodes sont insérées dans le corps 1 puis le couvercle 2 est fixé.

Lorsque la cellule d'électrolyse est plongée dans une solution d'eau salée et alimentée en électricité, elle produit de l'hypochlorite de sodium à raison d'au moins 10g/heure. Les dimensions du boîtier, hors éléments de connexion 3a, sont de 136x74x63 mm et a une masse de l'ordre de 170 g avec les électrodes.

L'appareil fonctionne avec une source de courant de 12V délivrant 4A au moins, telle qu'une batterie de voiture ou un adaptateur adéquat. Il peut également être alimenté directement par un panneau solaire de dimension appropriée.

La cellule d'électrolyse ainsi réalisée est très compacte, robuste, facile à mettre en oeuvre et ne souffre pas de corrosion, aucune soudure ou connexion n'étant immergée dans l'électrolyte.

Dans des variantes la cellule pourrait présenter d'autres dimensions et comporter un nombre différent d'électrode intermédiaire 4 pour autant que la tension et l'ampérage de la source de courant soient adaptés en conséquence.

Les faces extérieures des parois 6 et 7 de la cellule d'électrolyse comportent encore des formations d'accouplement par encliquetage. Chaque face des parois 6, 7 comporte une baguette longitudinale 14 constituant une formation d'accouplement mâle et une gouttière longitudinale 15 formant une formation d'accouplement femelle. Cette baguette 14 et cette gouttière 15 s'étendent parallèlement l'une à l'autre sur une partie au moins de la hauteur du corps 1 de la coque.

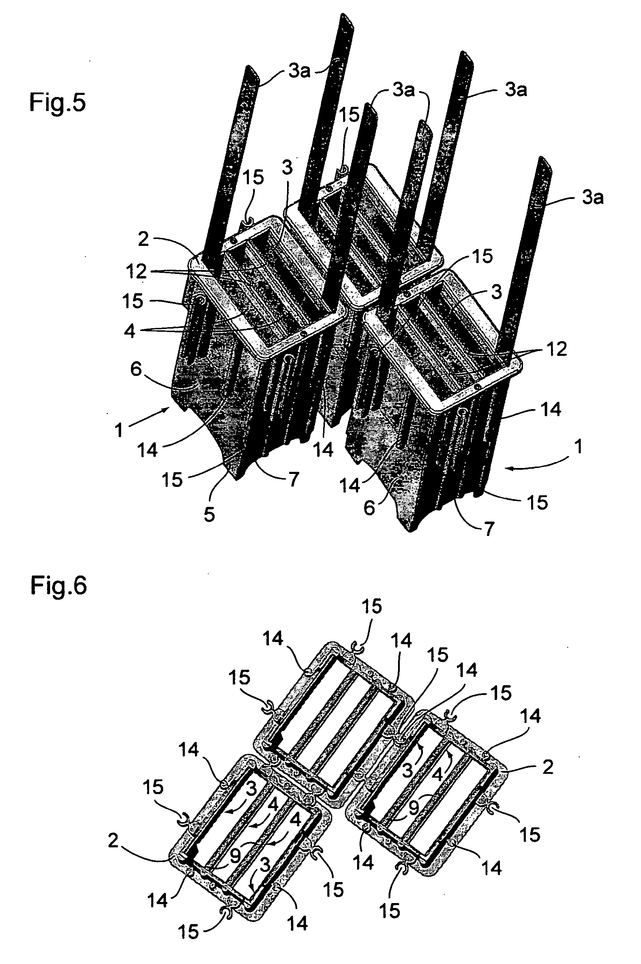

Grâce à ces formations d'accouplement mâles 14 et femelles 15 plusieurs cellules d'électrolyse peuvent être aisément assemblées par encliquetage comme illustré aux figures 5 et 6 de manière à réaliser un appareil d'électrolyse dont la capacité de production répond aux besoins précis d'une application donnée.

Les principaux avantages que présente l'appareil d'électrolyse selon l'invention sont :
1. de pouvoir répondre à une demande de production croissante par l'assemblage de cellules individuelles entre elles par simple clipsage,
2. l'utilisation optimale des feuilles de titane pour la fabrication des électrodes en réduisant les chutes de matière et limitant ainsi le coût de l'appareil,
3. la découpe originale des électrodes d'alimentation en forme de L évite une soudure ou une connexion dans la partie immergée. Ceci permet une fabrication plus simple évitant les processus d'assemblage et évite toute réaction de corrosion au niveau de la jonction entre la plaque 3 et la tige 3a des électrodes d'alimentation,
4. la forme particulière de l'extrémité de la tige 3a des électrodes d'alimentation 3 obtenue par simple découpe permet une connexion à des connecteurs standard ne nécessitant aucune connectique complémentaire.

## Revendications

1. Appareil d'électrolyse immergeable dans un électrolyte, notamment une solution d'eau salée, **caractérisé par le fait qu'**il comporte au moins une cellule d'électrolyse comportant une coque tubulaire ouverte à ses extrémités formée d'un corps (1) et d'un couvercle (2) en un matériau isolant; cette coque renfermant deux électrodes d'alimentation formée d'une plaque (3) et d'une tige (3a) venue d'une pièce de fabrication; et **par le fait que** les faces extérieures de la coque comportent des formations d'accouplement par encliquetage permettant d'assembler plusieurs cellules les unes aux autres.

2. Appareil selon la revendication 1, **caractérisé par le fait qu'**il comporte encore des électrodes intermédiaires (4) disposées dans les coques (1,2) parallèlement les unes aux autres et aux électrodes d'alimentation (3).

3. Appareil selon l'une des revendications 1 ou 2, **caractérisé par le fait que** l'extrémité libre des tiges (3a) des électrodes d'alimentation présentent une forme telle qu'elle puisse recevoir des connecteurs standard pour assurer la connexion entre cette électrode et une source de courant d'alimentation.

4. Appareil selon l'une des revendications précédentes, **caractérisé par le fait qu'**il comporte deux électrodes d'alimentation (3) et deux électrodes intermédiaires (4) ces quatre électrodes étant obtenues par découpage d'un flanc de matière rectangulaire, sans chutes.

5. Appareil selon l'une des revendications précédentes, **caractérisé par le fait que** chaque cellule présente en coupe transversale une forme générale rectangulaire ou carrée.

6. Appareil selon la revendication 5, **caractérisé par le fait que** deux parois se faisant face du corps (1) de la coque comportent des rainures longitudinales (10) dans lesquelles sont maintenues les électrodes (3, 4).

7. Appareil selon la revendication 6, **caractérisé par le fait que** le corps (1) de la coque comporte à proximité de son extrémité inférieure des organes d'arrêts (8, 9) servant de butée à la tranche inférieure des électrodes (3, 4).

8. Appareil selon la revendication 7, **caractérisée par le fait que** le couvercle (2) comporte des lamelles de retenue (11, 12) coopérant avec les tranches supérieures des électrodes (3, 4).

9. Appareil selon l'une des revendications précédentes, **caractérisé par le fait que** les formations d'accouplement de chaque face latérale de la cellule comportent une baguette (14) et une gouttière (15) susceptible de s'engager par clipsage dans la gouttière, respectivement sur la baguette d'une paroi d'une autre cellule d'électrolyse.

10. Appareil selon l'une des revendications précédentes, **caractérisé par le fait qu'**il comporte une pluralité de cellules individuelles accouplées par clipsage entre elles.

## Claims

1. Electrolysis device that can be immersed in an electrolyte, in particular a saltwater solution, **characterized by** the fact that it comprises at least one electrolysis cell that comprises a tubular shell that is open at its ends and that is formed by a body (1) and a cover (2) made of an insulating material, whereby this shell contains two power supply electrodes formed by a plate (3) and a rod (3a) that came from a production part, and by the fact that the outside faces of the shell comprise formations for coupling by ratcheting that make it possible to assemble several cells on one another.

2. Device according to claim 1, wherein it also comprises intermediate electrodes (4) that are arranged in shells (1, 2) that are parallel to one another and to power supply electrodes (3).

3. Device according to one of claims 1 or 2, wherein the free end of the rods (3a) of the power supply electrodes has a shape such that it can accommodate standard connectors to ensure the connection between this electrode and a feed current source.

4. Device according to one of the preceding claims, wherein it comprises two power supply electrodes (3) and two intermediate electrodes (4), whereby these four electrodes are obtained by cutting a side of rectangular material, without said material falling off.

5. Device according to one of the preceding claims, wherein each cell has a general rectangular or square shape in cross section.

6. Device according to claim 5, wherein two walls that face one another of body (1) of the shell comprise longitudinal grooves (10) in which the electrodes (3, 4) are maintained.

7. Device according to claim 6, wherein the body (1) of the shell, close to its lower end, comprises stop elements (8, 9) that are used as stops in the lower segment of the electrodes (3, 4).

8. Device according to claim 7, wherein the cover (2) comprises holding slats (11, 12) that work with the upper segments of the electrodes (3, 4).

9. Device according to one of the preceding claims, wherein the coupling formations of each lateral face of the cell comprise a rod (14) and a trough (15) that can be engaged by clamping in the trough, respectively on the rod of a wall of another electrolysis cell.

10. Device according to one of the preceding claims, wherein it comprises a number of individual cells that are coupled to one another by clamping.

## Patentansprüche

1. Elektrolysegerät, das in einen Elektrolyten, insbesondere eine Salzwasserlösung, eingetaucht werden kann, **dadurch gekennzeichnet, dass** es mindestens eine Elektrolysezelle umfasst, die ein an ihren Enden offenes röhrenförmiges Gehäuse umfasst, das aus einem Körper (1) und einem Deckel (2) aus einem Isoliermaterial gebildet ist; wobei dieses Gehäuse zwei Versorgungselektroden enthält, die aus einer Platte (3) und einem Stift (3a) aus einem Werkstück gebildet sind; und **dadurch**, dass die Außenflächen des Gehäuses Formgebungen zur Kopplung durch Einrasten umfassen, die das Zusammenbauen mehrerer Zellen aneinander ermöglichen.

2. Gerät nach Anspruch 1, **dadurch gekennzeichnet, dass** es ferner Zwischenelektroden (4) umfasst, die in den Gehäusen (1, 2) parallel zueinander und zu den Versorgungselektroden (3) angeordnet sind.

3. Gerät nach einem der Ansprüche 1 oder 2, **dadurch gekennzeichnet, dass** das freie Ende der Stifte (3a) der Versorgungselektroden eine derartige Form aufweist, dass es Standardverbinder aufnehmen kann, um die Verbindung zwischen dieser Elektrode und einer Versorgungsstromquelle zu gewährleisten.

4. Gerät nach einem der vorhergehenden Ansprüche, **dadurch gekennzeichnet, dass** es zwei Versorgungselektroden (3) und zwei Zwischenelektroden (4) umfasst, wobei diese vier Elektroden durch Schneiden einer Flanke aus einem rechteckigen Stoff ohne Reste erhalten werden.

5. Gerät nach einem der vorhergehenden Ansprüche, **dadurch gekennzeichnet, dass** jede Zelle im Querschnitt eine allgemein rechteckige oder quadratische Form aufweist.

6. Gerät nach Anspruch 5, **dadurch gekennzeichnet, dass** die zwei Wände des Körpers (1) des Gehäuses, die einander gegenüberliegen, Längsrillen (10) umfassen, in denen die Elektroden (3, 4) gehalten werden.

7. Gerät nach Anspruch 6, **dadurch gekennzeichnet, dass** der Körper (1) des Gehäuses in der Nähe seines unteren Endes Halteelemente (8, 9) umfasst, die dem unteren Abschnitt der Elektroden (3, 4) als Anschlag dienen.

8. Gerät nach Anspruch 7, **dadurch gekennzeichnet, dass** der Deckel (2) Rückhaltelamellen (11, 12) umfasst, die mit den oberen Abschnitten der Elektroden (3, 4) zusammenwirken.

9. Gerät nach einem der vorhergehenden Ansprüche, **dadurch gekennzeichnet, dass** die Formgebungen zur Kopplung jeder Seitenfläche der Zelle einen Stab (14) und eine Rinne (15) umfassen, die durch Einrasten in der Rinne beziehungsweise auf dem Stab einer Wand einer anderen Elektrolysezelle in Eingriff gebracht werden können.

10. Gerät nach einem der vorhergehenden Ansprüche, **dadurch gekennzeichnet, dass** es mehrere einzelne Zellen umfasst, die durch Einrasten untereinander gekoppelt sind.
